# EUROPEAN PATENT SPECIFICATION

(11) **EP 3 368 792 B1**
(45) Date of publication and mention of the grant of the patent: **25.11.2020**
(21) Application number: 16858537.0
(22) Date of filing: 27.10.2016
(51) Int. Cl.: F16H 7/08, F01L 1/02, F16H 7/12

(54) **TENSIONER WITH FIRST AND SECOND DAMPING MEMBERS AND INCREASED DAMPING**
SPANNER MIT ERSTEN UND ZWEITEN DÄMPFUNGSELEMENTEN UND ERHÖHTER DÄMPFUNG
TENDEUR AVEC PREMIER ET DEUXIÈME ÉLÉMENTS D'AMORTISSEMENT ET AMORTISSEMENT ACCRU

(30) Priority: 27.10.2015 US 201562247160 P; 04.11.2015 US 201562250742 P
(43) Date of publication of application: 05.09.2018
(73) Proprietor: Litens Automotive Partnership, Woodbridge, Ontario L4L 5T7 (CA)
(72) Inventor: FRANKOWSKI, Marek, Innisfil, Ontario L9S 2E6 (CA)
(74) Representative: Grünecker Patent- und Rechtsanwälte PartG mbB
(86) International application number: PCT/CA2016/051245
(87) International publication number: WO 2017/070784

(56) References cited:
- WO-A1-2014/063228
- WO-A2-02/095262
- US-A1- 2010 069 185
- US-A1- 2010 081 529
- US-A1- 2014 113 755

## Description

### FIELD

This disclosure relates to tensioners and in particular tensioners that operate to tension synchronous endless drive members such as a timing belt on an engine.

### BACKGROUND

Tensioners are known devices for maintaining tension in belts (e.g. timing belts) or other endless drive members that are driven by an engine and that are used to drive certain components, such as camshafts. A tensioner typically includes a shaft and base unit that mounts to the engine, a tensioner arm that is pivotable with respect to the base about a pivot axis, a pulley that is mounted on the arm for engagement with the belt, and a spring that acts between the base and the arm to drive the arm into the belt. The direction into the belt (i.e. the direction in which the spring drives the arm) may be referred to as a direction towards a free arm position (i.e. towards a position that the tensioner arm would reach if no belt were present to stop it). This is a direction of lessening spring potential energy. The tensioner arm in general moves in this direction as the belt tension drops. The direction away from the belt (i.e. the direction against the biasing force of the spring) may be referred to as a direction towards a load stop position, and is a direction of increasing spring potential energy. The tensioner arm in general moves in this direction as the belt tension increases. It is known that it is desirable to provide damping on a tensioner in order to assist the tensioner arm in resisting being thrown off a belt (e.g. a timing belt) during sudden increases in belt tension which can accelerate the tensioner arm suddenly towards the load stop position. In at least some applications, however, the damping that is available from a typical prior art tensioner is not sufficient to satisfactorily dampen movement of the tensioner arm. It would therefore be desirable to provide a tensioner that has increased damping relative to typical prior art tensioners.

US 2010/081529 A1 discloses a tensioning device for a traction mechanism drive for a belt drive that is incorporated in an internal combustion engine, in order to drive components of the engine or installed accessories. The tensioning device includes a base part, a swivel arm, a torsion spring with a first winding end section that is allocated to the swivel arm and a second winding section that is allocated to the base part for applying a pivoting moment acting between the base part and the swivel arm and forcing the swivel arm in a tensioning direction, and a damping device for generating a damping force that counteracts a pivoting of the swivel arm directed against the tensioning direction. This damping device includes a first friction surface element that is arranged in a region of the winding end section of the torsion spring allocated to the swivel arm, and forms a friction surface that is used for applying friction force and that sits on a counter friction surface. In the region of the second winding end of the torsion spring for the base part, there is a second friction surface element that forms a friction surface that sits on a counter friction surface, and the counter friction surface is formed by a friction surface structure that can pivot together with the swivel arm.

WO 02/ 095262 discloses an asymetic damping tensioner system for belt drives on an engine. A biasing member in the tentioner is used to maintain a tention in the belt. The tensioner further comprises a damping mechanism to damp belt vibrations caused by the operation of the engine. Tensioner damping friction is unequal or asymmetric, depending upon the direction of movement of the tentioner arm.

US 2010/069185 A1 discloses a tensioner comprising a base having a sleeve, an arm pivotally engaged with the sleeve, a spring engaged between the arm and the base, a pulley journalled to the arm, an adjuster engaged with the sleeve for rotationally adjusting a position of the sleeve on a mounting surface, three or more concentric cylindrical bushings, each bushing fictionally engaged with the arm and the sleeve for damping an arm movement and the cylindrical bushings suitable for operation in lubricant.

US 2014/113755 A1 discloses a tensioner comprising a base, a shaft connected to the base, an eccentric adjuster coaxially engaged with the shaft, an arm pivotally engaged with the shaft, a pulley journalled to the arm, a torsion spring engaged between the arm and the base, the arm comprising a first receiving portion and a second receiving portion disposed axially opposite from the first receiving portion, a first damping member disposed between the arm and the base, the first damping member frictionally engaged with the base and engaged with first receiving portion, a second damping member disposed between the arm and the eccentric adjuster having a member engaged with the second receiving portion, and a biasing member disposed between the first damping member and the arm for applying a normal force to the first damping member and to the second damping member.

Also WO 2014/063228 A1 discloses a tensioner for an endless drive member.

### SUMMARY

In particular it is provided a tensioner having the features defined in claim 1. Further preferred embodiments are defined in the dependent claims.

### BRIEF DESCRIPTION OF THE DRAWINGS

Figure 1 is an elevation view of an engine, with an endless drive arrangement that incorporates a tensioner in accordance with an embodiment of the present disclosure, incorporating first and second damping members;
Figure2A is a magnified perspective view of the shown in Figure 1 ;
Figure2B is another perspective view of the tensioner shown in Figure 1A;
Figures 3A and 3B are exploded perspective views of the tensioner shown in Figure 1;
Figure4 is a sectional side view of the tensioner shown in Figure 1 ;
Figure5 is a highly magnified sectional side view of the tensioner shown in Figure 4, showing forces acting on the first and second damping members;
Figure 6 is a sectional plan view of a proximal portion of the tensioner shown in Figure 1;
Figure 7 is a sectional plan view of a distal portion of the tensioner shown in Figure 1;
Figure 8A is a plan view of selected components from the tensioner shown in Figure 1;
Figure 8B is a perspective view of a spring from the tensioner shown in Figure 1;
Figure 9 is a graph illustrating the tension/displacement relationship for an example of the tensioner shown in Figures 1A-3, and two tensioners of the prior art;
Figure 10 is a graph illustrating the relative amounts of damping that are provided by an example of the tensioner shown in Figures 1A-3, and two tensioners of the prior art;
Figure 11 is a sectional side view of the tensioner shown in Figure 1, with an alternative arrangement of first and second damping members;
Figure 12 is a highly magnified sectional side view of the tensioner shown in Figure 11, showing forces acting on the first and second damping members; and
Figure 13 is a plan view of the tensioner shown in Figure 1, with a shoe instead of a pulley for engagement with an endless drive member.

### DETAILED DESCRIPTION OF EXAMPLE EMBODIMENTS

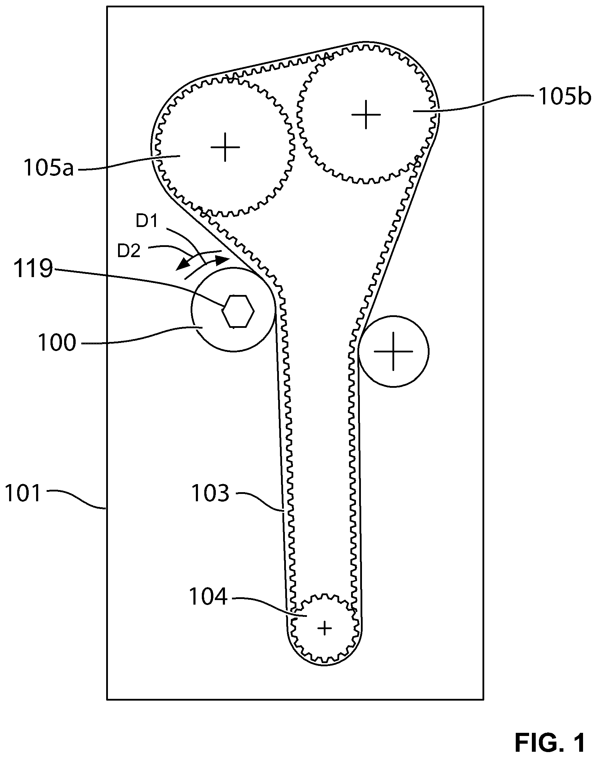

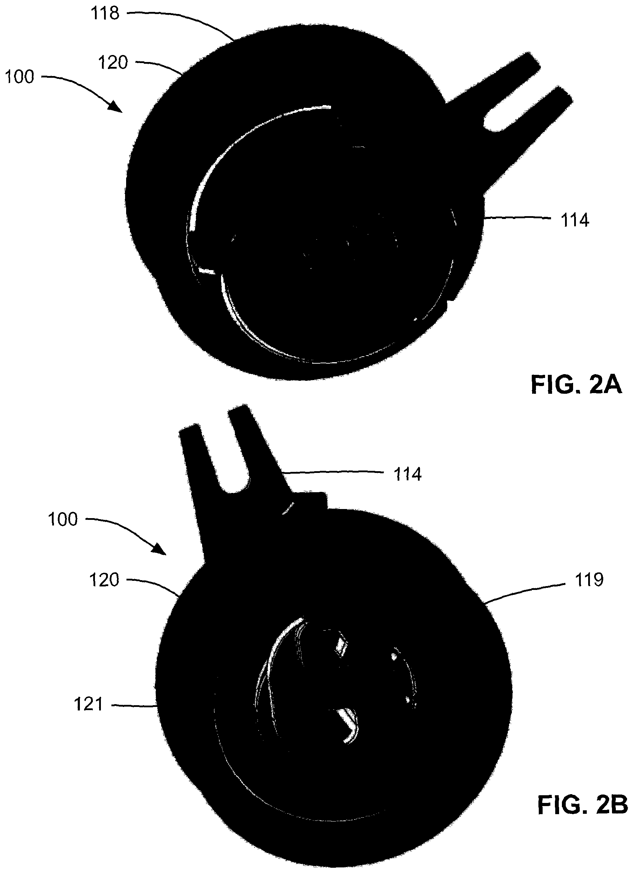

A tensioner 100 in accordance with an embodiment of the present disclosure is shown in Figures 1, 2A and 2B, and provides additional damping as compared to some tensioners of the prior art. The tensioner 100 may be configured to maintain tension in an endless drive member 103 on an engine 101. The endless drive member 103 in the example shown in Figure 1A is a timing belt, however, the endless drive member may be an accessory drive belt (not shown), or any other suitable non-synchronous or synchronous endless drive member that transfers rotational power from a crankshaft 104 of the engine 101 to one or more driven components such as, for example, a pair of camshafts 105a and 105b. For convenience and readability, the endless drive member 103 may be referred to as the belt 103 or as the timing belt 103, however it will be understood that any suitable endless drive member could be used.

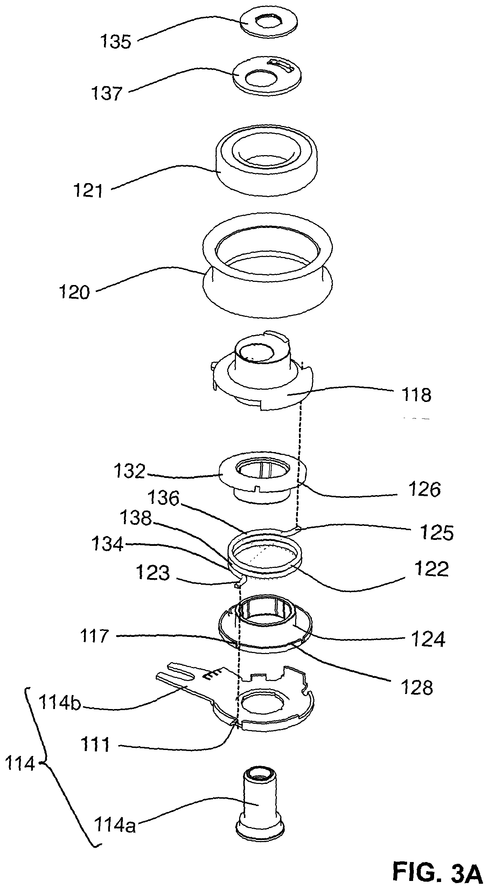

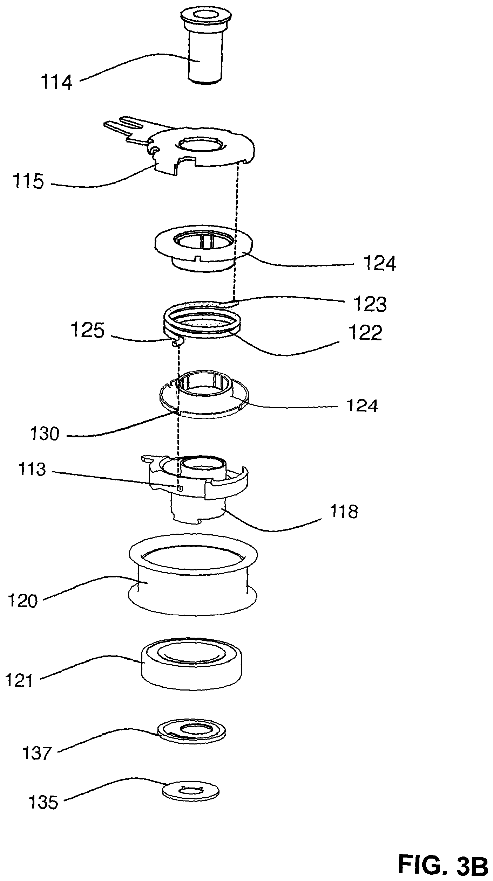

With reference to Figures 3A and 3B, the tensioner 100 includes a shaft and base unit 114, a bushing 116, a tensioner arm 118, a pulley 120 that rotates on the tensioner arm 118, a tensioner spring 122, a first damping member 124 and a second damping member 126. The shaft and base unit 114 may include a shaft 114a and a base 114b that are separate from one another but which are integrally connected by any suitable means, such as, for example, by staking. The shaft and base unit 114 is mountable to be stationary relative to the engine 101 by any suitable means. For example, the shaft and base unit 114 may be mountable directly to the engine block as shown in Figure 1 via a threaded fastener 119, which may be, for example, a bolt.

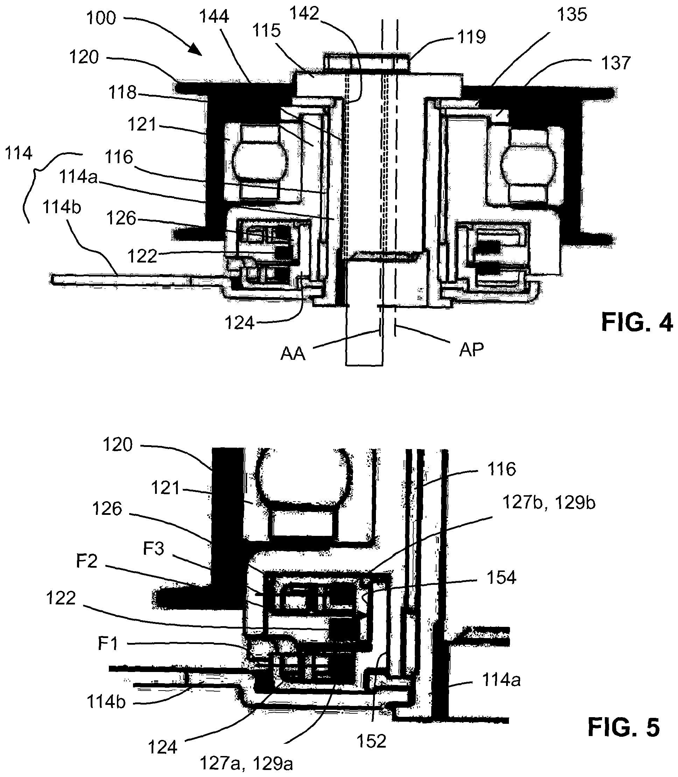

The shaft and base unit 114 may further include an optional installation eccentric member 115 (not shown in Figures 3A and 3B, but shown in Figure 4). The installation eccentric member 115 has a radially outer surface 144 on which the shaft 114a is pivotably mounted, and a fastener pass-through aperture 146 that receives the threaded fastener 119, and which is eccentrically mounted relative to the outer surface 142. The radially outer surface 142 sets the position of the arm pivot axis AA. The installation eccentric member 115 is pivotable about the fastener 119 to a selected position prior to tightening down of the fastener 119 on the engine block so as to provide some adjustment in the position of the arm pivot axis AA relative to the endless drive member 103.

The tensioner arm 118 is pivotally mounted to the shaft 114a (or more generally, about the shaft and base unit 114) for pivotal movement about a tensioner arm axis AA. Pivotal movement in a first direction D1 (Figure 1) may be referred to as movement in a free arm direction. Pivotal movement in a second direction D2 (Figure 1) may be referred to as movement in a load stop direction. The free arm direction and the load stop direction are described above and will be understood by one skilled in the art.

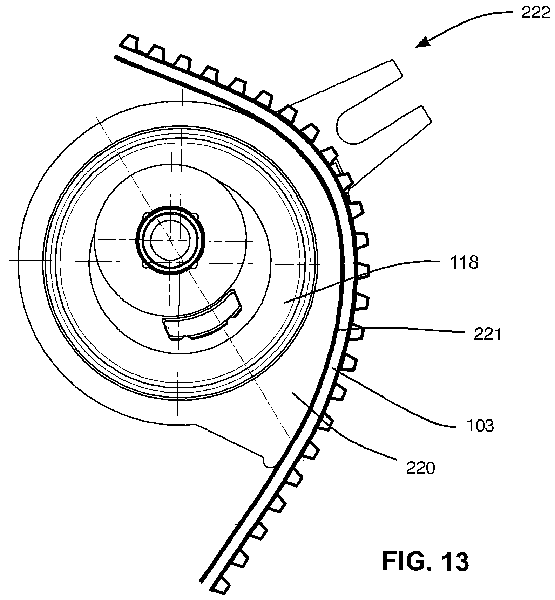

The pulley 120 is rotationally mounted to the tensioner arm 118, optionally via a bearing 121 (e.g. a ball bearing shown in Figure 4), for rotation about a pulley axis AP that is offset from the arm pivot axis AA by a selected offset distance. The pulley 120 is engageable with the endless drive member 103. The pulley 120 is just one example of an endless drive member engagement member that is mountable to the tensioner arm 118 and is engageable with the endless drive member 103. Another example of the endless drive member engagement member that may be used in some embodiments is a shoe 220, such as is shown in Figure 13, wherein the shoe 220 is fixedly mounted to an outside surface of the tensioner arm 118 and has an endless drive member engagement surface 221 that is engageable with the endless drive member 103. The tensioner shown in Figure 13 is shown at 222 and may otherwise be similar to the tensioner 100. An example of the shoe 220 and its operation is further described in US2014/0287859, the contents of which are incorporated fully herein by reference.

The tensioner spring 122 (which may more broadly referred to as the spring 122) applies a spring force on the tensioner arm 118 rotationally to urge the tensioner arm in the first rotational direction (i.e. the free arm direction). As shown in Figures 2A and 2B, the tensioner spring 122 may be a helical torsion spring and may have a first end 123 and a second end 125, each of which ends in a tang. The tang at the first end 123 engages the base 114b (more particularly it engages a slot 111 in the base 114b) so as to anchor the first end 123 of the spring 122. Additionally, the tang at the first end 123 passes through a slot 117 in a lip 128 of the first damping element 124, thereby rotationally fixing the damping element 124 to the base 114b. In some embodiments, the lip 128 may lack a slot at least initially when installed, and the tang at the first end 123 may simply press axially on the lip 128 with sufficient force that the first damping member 124 is frictionally fixed to the base 114b. Additionally, the force of the tang may be sufficient to form a groove in the lip 128 after some period of time.

The tang at the second end 125 engages the tensioner arm 118 (more particularly it passes through a spring tang aperture 113 in the tensioner arm 118) so as to apply a biasing force urging the tensioner arm 118 into the belt 103. Additionally, the tang at the second end 125 passes through a slot 130 in a lip 132 of the second damping element 126, thereby rotationally fixing the damping element 126 to the tensioner arm 118. In some embodiments, the lip 132 may lack a slot at least initially when installed, and the tang at the second end 125 may simply press down on the lip 132 with sufficient force that the second damping member 126 is frictionally fixed to the tensioner arm 118. Additionally, the axial force of the tang may be sufficient to form a groove in the lip 132 after some period of time.

Through its engagement with the tensioner arm 118 and the shaft and base unit 114, the tensioner spring 122 urges the tensioner arm 118 in the free arm direction, thereby driving the pulley 120 into the timing belt 103, while the belt 103 applies a force on the pulley 120 urging the tensioner arm 118 in the load stop direction, against the urging of the spring 122. In the embodiment shown in Figures 2A-8B, the spring 122 may progressively constrict radially under increasing flexure (i.e. as the arm moves in the load stop direction).

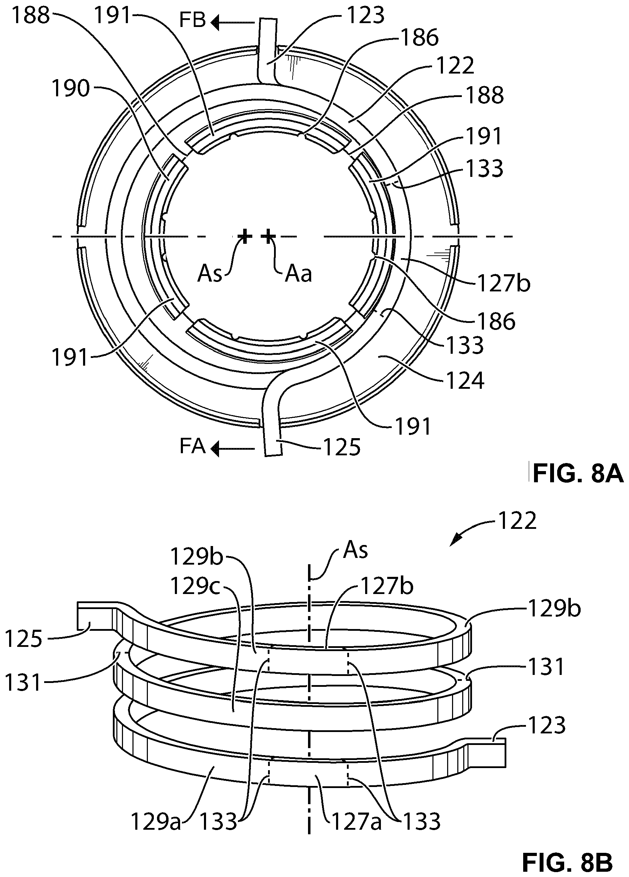

The spring 122 may include more than one coil, wherein a coil is a segment of the spring 122 that extends through 360 degrees. In the present example, with reference to Figure 8B, the spring 122 has 2.5 coils including a first coil 129a which is the coil that includes the first end 123 of the spring 122, a second coil 129b which is the coil that includes the second end 125 of the spring 122. Given that the spring 122 in the example shown in the figures has 2.5 coils in total, there is a 180 degree segment of the spring (shown at 129c) between the first and second coils 129a and 129b. Delimiters between the coils 129a, 129b and the segment 129c are shown at 131.

A retaining washer 135 is staked to a free end of the shaft 114a to hold selected components together. A polymeric bushing plate 137 is provided between the retaining washer 135 and the tensioner arm 118 to prevent metal-to-metal contact therebetween.

The bushing 116 and the damping elements 124 and 126 may all together be included in a damping structure that absorbs some kinetic energy from the belt 103 and converts it to heat through friction between components of the damping structure. The damping structure is advantageous in several respects and is described in further detail below.

The damping elements 124 and 126 may be made from nylon or any other suitable material, such as nylon with a Teflon™ coating on any working surfaces. Materials and coatings may be selected so that damping and wear characteristics may be as desired for a particular application.

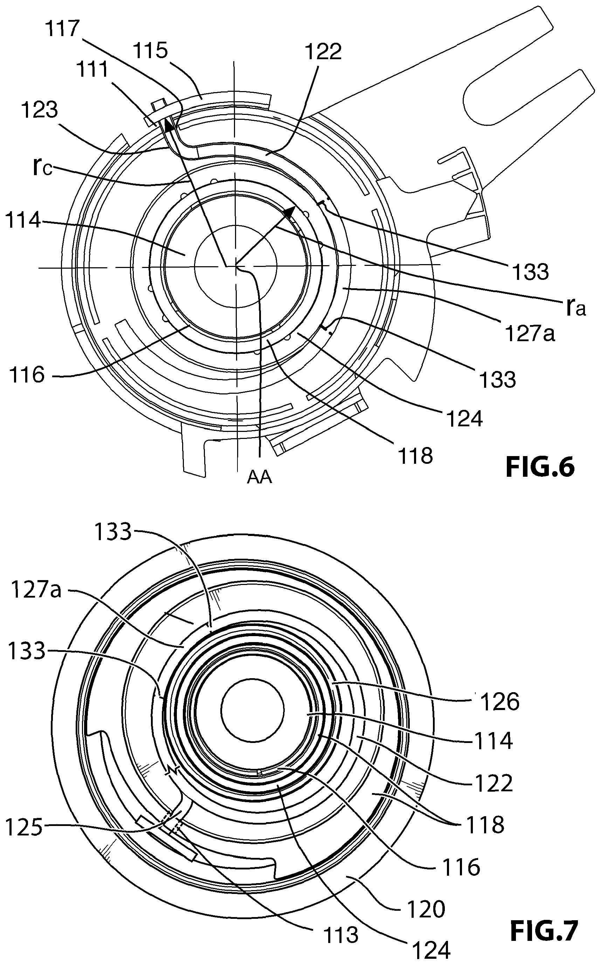

Figure 6 is a sectional view of a 'bottom' or 'proximal' portion of the tensioner 100 that contacts the engine. Figure 7 is a sectional view of an 'upper' or 'distal' portion of the tensioner 100. Figure 8 is a plan view of the spring 122 and the damping element 124. Figure 8A is a perspective view of the spring 122 alone.

Referring to Figures 6, 7, 8A and 8B, the first and second damping members 124 and 126 are positioned such that a first segment 127a of the first end coil 129a engages the first damping member 124 and such that a second segment 127b in the second end coil 129b engages the second damping member 126. The segments 127a and 127b are shown in a perspective view in Figure 8B. In Figure 6, only a portion of the spring 122 is shown so that the segment 127a is not obstructed. In Figure 7, a different portion of the spring 122 is shown so that the segment 127b can be seen unobstructed. As can be seen in Figures 6, 7 and 8B, delimiters shown at 133 show the extents of the segments 127a and 127b (i.e. they show the ends of the portions of the spring 122 that contact the first and second damping members 124 and 126). As can be seen, the first segment 127a and the second segment 127b are axially offset or spaced from one another, and are in the first end coil 129a and second end 129b, respectively. Also, as can be seen in Figure 8B, the first and second segments 127a and 127b are generally aligned axially.

As shown in Figure 8A, a force F (at a distance rc (i.e. a radius rc) from the arm pivot axis AA) is exerted on the second end 125 of the spring 122 by the tensioner arm 118 during engagement with the belt 103. This force FA results in a reaction force FB by the shaft and base unit 114 on the first end 123 of the spring 122 so that the torques acting on the arm 118 are in equilibrium. The force F on the first spring end 123 results in a first radially-directed force F1 (Figure 5) acting from the first segment 127a of the spring 122 on a radially outer surface of the first damping member 124. A radially-directed force may simply be referred to as a radial force, for ease of reading. This first radial force F1, which may be substantially the same magnitude as the force F, directly results in a first amount of frictional force FF1 between the first damping member 124 and a surface 152 that moves with the tensioner arm 118 (and which is, in the present example, on the tensioner arm 118), at a distance ra (i.e. a radius ra) from the axis AA. The force F on the second end 125 results in a second radial force F2 acting from the second segment 127b of the spring 122 on a radially outer surface of the second damping member 126. This second radial force F2, which may be substantially the same magnitude as the force F, directly results in a second amount of frictional force FF2 between the second damping member 126 and a surface 154 that moves with the shaft and base unit 114 (and which is, in the present example, on the first damping member 124). Furthermore, the second radial force F2 results in a third radial force F3 being transmitted by the second damping member 126 on the first damping member 124, which results in a third amount of frictional force FF3 between the first damping member 124 and the surface 152 that moves with the tensioner arm 118. As a result, the overall frictional force (and therefore damping force) generated by the first and second damping members 124 and 126 is significantly higher than is present in some tensioners of the prior art. This is based on the assumption that the force F that is exerted at the two ends 123 and 125 of the spring 122 are approximately in the same direction, which is true when the spring ends 123 and 125 are approximately 180 degrees apart angularly about the spring axis, shown at As (Figure 8A). As can be seen in Figure 8A, when the spring ends 123 and 125 are 180 degrees apart, the forces F on the spring ends 123 and 125 are aligned and are purely additive. When they are at some other angle relative to each other, the forces F are not purely additive and vector components of the forces F must be considered to determine the overall force exerted on the first and second damping members 124 and 126.

As noted above the first spring end 123 is stationary with the shaft and base unit 114 and the second spring end 125 moves with the tensioner arm 118. Thus, there is relatively little frictional movement generated between the first spring segment 129a and the first damping member 124, and relatively little frictional movement generated between the second spring segment 129b and the second damping member 126. As a result, there is less potential for wear on the surfaces of the first and second damping members 124 and 126 that engage the spring 122 as compared to some tensioners of the prior art where there is significant frictional movement between the spring and the adjacent damping member.

The additional damping provided by the embodiment shown in Figure 4 may permit the use of a longer arm tensioner than is possible with some prior art tensioners. It may also permit the tensioner 100 to be used in a belt-in-oil application, in either a short-arm or long-arm configuration.

It will be noted that, while the spring 122 constricts during operation and applies a compressive force on the damping element 124 it may push oil away (in a helical direction - along the length of the spring coils) from the contact area between the spring 122 and the damping element 124. As a result, the presence of oil may not cause a large reduction in friction between the spring 122 and the damping element 124. It will also be noted that, while the spring 122 may be made from a spring wire having a square or rectangular cross-section, the wire may twist by some angle during operation and thus may engage the damping element at some points along a corner of the cross-sectional shape and not along a flat face of the cross-sectional shape. This will reduce by some amount lubricating effects of any oil that is present that would reduce the friction between the spring 122 and the damping element 124.

In other embodiments, the spring 122 may be of the type that expands radially under increasing flexure from movement of the arm 118 in the load stop direction. In such embodiments, the damping members 124 and 126 may be positioned radially outside of the spring 122 instead of being positioned radially inside the spring 122 as they are in the embodiments shown in the figures.

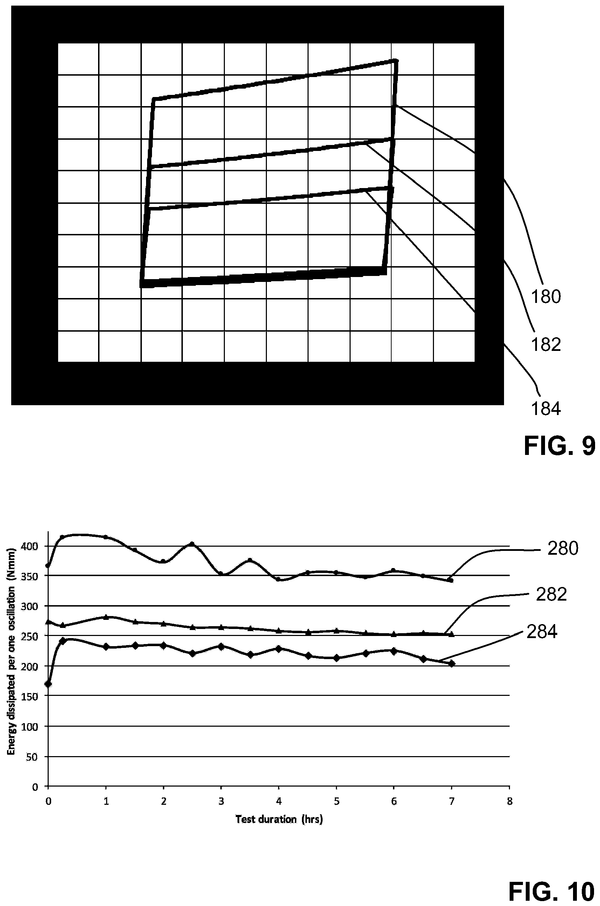

The performance of the tensioner 100 relative to the tensioner 10 is shown in Figure 9, which shows a hysteresis curve 180 for the tensioner 100, a hysteresis curve 182 for a tensioner as shown in Figure 4 of US2014/0287859 and a hysteresis curve 184 for a tensioner with no damping element as shown in Figure 1 of US2014/0287859. It will be understood that the taller the hysteresis curve, the more damping that is provided by the tensioner. Therefore, it can be seen that the tensioner 100 provided higher damping than either of the other tensioners represented in Figure 9. Figure 10 shows curves that illustrate the amount of energy can be dissipated by the three tensioners represented in Figure 9 per oscillation, over time. The curve shown at 280 represents the tensioner 100, the curve 282 represents the tensioner shown in Figure 4 of US2014/0287859 and the curve 284 represents the tensioner shown in Figure 1 of US2014/0287859.

In applications where the friction surfaces will be exposed to oil, features may be provided to assist in removing oil from them so as to reduce the risk of sudden drops in friction and damping that can occur from the presence of oil. Slits (which may be referred to as channels or grooves) shown at 186 in Figure 8A in the damping element 124 are designed to provide oil reservoirs or transport channels to help to transfer oil out from contacting surfaces between the damping element 124 and the arm 118 (not shown in Figure 9). The channels 186 may be provided with sharp edges which can scrape oil from the surface of the arm 118 to reduce the risk of development of an oil film between the contacting surfaces of the damping element 124 and the arm 118. The presence of the channels 186 reduces the overall contact area between the damping element 124 and the arm 118, which increases the surface pressure between them. The size and/or number of the channels 186 can be selected to provide a selected surface pressure that may be high enough to squeeze oil out from between the contacting surfaces.

Another feature that may be provided on the damping element 124 may be reductions in wall thickness 188, which may be referred to as flex joints 188. The flex joints 188 increase the flexibility of the damping element wall (shown in Figure 8A at 190) which increases the contact area between the wall 190 and the tensioner arm 118 which in turn makes for less wear and more stable friction between them. These flex joints 188 can be provided any suitable way. For example, the flex joints 188 may extend axially along the axial length of the damping element wall 190. They may, in some embodiments, be provided on the face of the wall 190 that faces the arm 118. In the embodiment shown in Figure 8A, it can be seen that the flex joints 188 are formed by slots that pass through the entirety of the wall thickness and which extend substantially along the entire axial length of the damping element 124 and which are closed at a first end 188a and open at a second end 188b. As can be seen in Figure 8A in particular, these slots separate a portion of the damping element 124 into segments shown at 191.

The tensioner 100 can provide good damping even in the presence of oil facilitates its use in a belt-in-oil arrangement, as a replacement for a timing chain design on an engine. For greater certainty however, it will be noted that the tensioner 100 may also be advantageous in applications where no oil is present.

While a spring 122 having 2.5 coils in helical length is shown in the figures, it will be understood that the spring 122 could have fewer or more than 2.5 coils, as noted above. For example, the spring 122 could have 1.5 coils and still have ends that are 180 degrees apart angularly, and would still have two segments that engage the damping element 124. In another example, the spring 122 could have 1.25 coils of helical length and would have ends that are 90 degrees apart angularly, while still having two segments that engage the damping element, although the forces applied at the spring ends would add in a vector sum of about 1.4F in such an instance. Other spring lengths are possible, such that three, four or any suitable number of segments of the spring 122 would engage a suitably lengthened version of the damping element 124.

In the embodiment of the invention as shown in Figures 4 and 5, the first damping member 124 directly radially engages a radially outer face of the tensioner arm 118, the second damping member 126 directly radially engages a radially outer face of the first damping member 124, and the tensioner spring 122 directly radially engages both the first and second damping members 124 and 126.

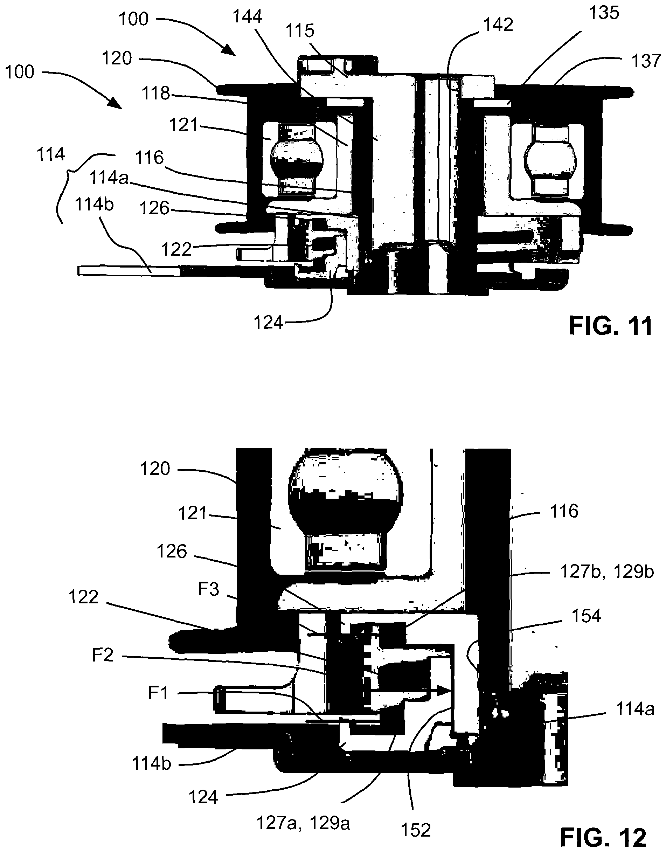

An alternative embodiment of the tensioner 100 is shown in Figures 11 and 12, wherein the second damping member 126 directly radially engages a radially outer face of the shaft and base unit 114, the first damping member 124 directly radially engages a radially outer face of the second damping member 126, and the tensioner spring 122 directly radially engages both the first and second damping members 124 and 126. The tensioner 100 shown in Figures 11 and 12 may otherwise be similar to the tensioner 100 shown in Figures 4 and 5.

In the unclaimed embodiment shown in Figures 11 and 12, the force on the first spring end 123 (Figure 8B) again results in a first radially-directed force F1 acting from the first segment 127a of the spring 122 on a radially outer surface of the first damping member 124, which directly results in a first amount of frictional force FF1 between the first damping member 124 and a surface 152 that moves with the tensioner arm 118 (and which is, in this example, on the second damping member 126). The force on the second end 125 (Figure 8B) results in a second radial force F2 acting from the second segment 127b of the spring 122 on a radially outer surface of the second damping member 126. This second radial force F2, which may be substantially the same magnitude as the force on each of the spring ends 123 and 125, directly results in a second amount of frictional force FF2 between the second damping member 126 and a surface 154 that moves with the shaft and base unit 114 (and which is, in the present example, directly on the shaft and base unit 114). Furthermore, the second radial force F2 results in a third radial force F3 being transmitted by the second damping member 126 on the first damping member 124, which results in a third amount of frictional force FF3 between the first damping member 124 and the surface 152 that moves with the tensioner arm 118. As a result, the overall frictional force (and therefore damping force) generated by the first and second damping members 124 and 126 is significantly higher than is present in some tensioners of the prior art.

Providing the tensioner 100 which has a spring 122 with first and second axially spaced segments in contact with first and second damping elements 124 and 126 that are associated with the shaft and base unit 114 and the tensioner arm 118 provides several advantages. It can be seen that, because the first damping member 124 is stationary with the shaft and base unit 114, and because the first spring end 123 is also stationary with the shaft and base unit 114, there is relatively little relative sliding movement of any portion of the first coil 134 with the outer surface of the first damping member 124, which reduces the likelihood that the first coil 134 will wear a groove into the first damping member 124 over time. Similarly, because the second damping member 126 moves with the tensioner arm 118, and because the second spring end 125 also moves with the tensioner arm 118, there is relatively little relative sliding movement of any portion of the second coil 136 with the outer surface of the second damping member 126, which reduces the likelihood that the second coil 136 will wear a groove into the second damping member 126 over time.

Another advantage is that, as noted above, the overall damping force exerted by the first and second damping members 124 and 126 is larger than in certain prior art tensioners due to the fact that one of the first and second damping members 124 or 126 receives a radial force from both the first and second coils 134 and 136 which generates the friction force between the first or second damping member 124 or 126 and the shaft and base unit 114 or the arm 118, and the fact that the other of the first and second damping members 124 or 126 receives a radial force from one of the first and second spring coils 134 or 136, as described above, which generates the friction force between the first and second damping members 124 and 126. The resulting improvement in the total amount of damping that occurs, in comparison with certain prior art damping structures, can facilitate the use of the tensioner 100 in a belt-in-oil application and/or the use of a longer arm tensioner than is possible using some damping structures of the prior art.

The tensioner 100 described above is but an example of a device that is engageable with an endless drive member on an engine. The shaft and base member 114 is but an example of a first main device member that is mountable to be stationary relative to an engine. The tensioner arm 118 is but an example of a second main device member that is pivotable relative to the first main device member about an axis and which is engageable with an endless drive member. In some other embodiments, the device could be, for example, an isolator that is mounted to the crankshaft or to an accessory drive shaft on an accessory drive of an engine, and which incorporates a helical torsion spring that is similar to the spring 122. The first main device member could, in such an embodiment, be a shaft adapter that mounts to a first point relative to an engine (e.g. to one of the aforementioned shafts), and the second main device member could be a pulley that directly drives or is driven by an accessory drive belt. It has been found that damping in isolators can be helpful. Alternatively, the device may be a decoupler which is similar to an isolator but which also incorporates a one way clutch such as a wrap spring clutch.

In another unclaimed embodiment, the device could be an accessory drive tensioner that typically has a relatively longer distance between the pulley axis AP and the arm pivot axis AA and is used to maintain tension in an accessory drive belt.

The above-described embodiments are intended to be examples only, and alterations and modifications may be carried out to those embodiments by those of skill in the art.

## Claims

1. A tensioner (100) for an endless drive member (103) on an engine, comprising:
a shaft and base unit (114) that is mountable to be stationary relative to an engine;
a tensioner arm (118) that is pivotable relative to the shaft and base unit (114) about a tensioner arm axis (AA);
an endless drive member engagement member (120) on the tensioner arm (118) and engageable with an endless drive member (103);
a tensioner spring (122) that urges the tensioner arm (118) in a free arm direction; a first damping member (124) that is fixed relative to the shaft and base unit (114), and which receives a first radial force from a first segment of the tensioner spring (122) that causes a first amount of frictional force between the first damping member (124) and a surface that moves with the tensioner arm (118); and
a second damping member (126) that is fixed relative to the tensioner arm (118), and which receives a second radial force from a second segment of the tensioner spring (122) that is spaced axially from the first segment of the tensioner spring (122), that causes a second amount of frictional force between the second damping member (126) and a surface that is stationary with the shaft and base unit (114), wherein the first damping member directly radially engages a radially outer face of the tensioner arm (118), the second damping member (126) directly radially engages a radially outer face of the first damping member (124), and the tensioner spring (122) directly radially engages both the first and second damping members (124, 126).

2. A tensioner (100) as claimed in claim 1 , wherein the surface that moves with the tensioner arm (118) is on the tensioner arm (118), and wherein the surface that is stationary with the shaft and base unit (114) is on the first damping member (124).

3. A tensioner (100) as claimed in claim 2, wherein the first damping member (124) receives a third radial force from the second segment of the tensioner spring (122) that causes a third amount of frictional force between the first damping member (124) and the tensioner arm (118), such that a total frictional force between the first damping member (124) and the tensioner arm (118) is contributed to by the first and third radial forces.

4. A tensioner (100) as claimed in claim 1 , wherein the surface that moves with the tensioner arm (118) is on the second damping member (126), and wherein the surface that moves with the shaft and base unit (114) is on the shaft and base unit (114).

5. A tensioner (100) as claimed in claim 4, wherein the second damping member (126) receives a third radial force from the first segment of the tensioner spring (122) that causes a third amount of frictional force between the second damping member (126) and the shaft and base unit (114), such that a total frictional force between the second damping member (126) and the shaft and base unit (114) is contributed to by the first and third radial forces and/or the second damping member (126) directly radially engages a radially outer face of the shaft and base unit (114), the first damping member (124) directly radially engages a radially outer face of the second damping member (126), and the tensioner spring (122) directly radially engages both the first and second damping members (124, 126).

6. A tensioner (100) as claimed in one of the preceding claims, wherein the tensioner spring (122) is a helical torsion spring and/or the first segment of the tensioner spring (122) has a first spring end (123) that is fixed relative to the shaft and base unit (114) and the second segment of the tensioner spring (122) has a second spring end (125) that is fixed relative to the tensioner arm (118).

7. A tensioner (100) as claimed in one of the preceding claims, wherein the endless drive member engagement member is a pulley (120) that is rotatable about a pulley axis (AP) that is offset from the tensioner arm axis (AA) .

## Patentansprüche

1. Eine Spannvorrichtung (100) für ein endloses Antriebselement (103) an einem Motor, umfassend:
eine Wellen- und Basiseinheit (114), die so montiert werden kann, dass sie relativ zu einem Motor stationär ist;
einen Spannerarm (118), der relativ zu der Wellen- und Basiseinheit (114) um eine Spannerarmachse (AA) schwenkbar ist;
ein Endlos-Antriebselement-Eingriffselement (120) auf dem Spannerarm (118), das mit einem endlosen Antriebselement (103) in Eingriff gebracht werden kann;
eine Spannfeder (122), die den Spannerarm (118) in eine Freiarmrichtung drückt;
ein erstes Dämpfungselement (124), das relativ zu der Wellen- und Basiseinheit (114) fixiert ist und das eine erste radiale Kraft von einem ersten Segment der Spannfeder (122) empfängt, die einen ersten Betrag einer Reibungskraft zwischen dem ersten Dämpfungselement (124) und einer Oberfläche, die sich mit dem Spannerarm (118) bewegt, verursacht; und
ein zweites Dämpfungselement (126), das relativ zu dem Spannerarm (118) fixiert ist und das eine zweite radiale Kraft von einem zweiten Segment der Spannfeder (122) erhält, das axial von dem ersten Segment der Spannfeder (122) beabstandet ist, die einen zweiten Betrag der Reibungskraft zwischen dem zweiten Dämpfungselement (126) und einer Oberfläche bewirkt, die mit derWellen- und Basiseinheit (114) stationär ist,
wobei das erste Dämpfungselement direkt radial an einer radial äußeren Fläche des Spannerarms (118) angreift, das zweite Dämpfungselement (126) direkt radial an einer radial äußeren Fläche des ersten Dämpfungselements (124) angreift und die Spannfeder (122) direkt radial sowohl am ersten als auch am zweiten Dämpfungselement (124, 126) angreift.

2. Eine Spannvorrichtung (100) nach Anspruch 1, wobei sich die Oberfläche, die sich mit dem Spannerarm (118) bewegt, auf dem Spannerarm (118) befindet, und
wobei sich die Oberfläche, die mit der Wellen- und Basiseinheit (114) stationär ist, auf dem ersten Dämpfungselement (124) befindet.

3. Eine Spannvorrichtung (100) nach Anspruch 2, wobei das erste Dämpfungselement (124) eine dritte Radialkraft von dem zweiten Segment der Spannfeder (122) empfängt, die einen dritten Betrag an Reibungskraft zwischen dem ersten Dämpfungselement (124) und dem Spannerarm (118) verursacht, so dass eine Gesamtreibungskraft zwischen dem ersten Dämpfungselement (124) und dem Spannerarm (118) durch die erste und dritte Radialkraft beigetragen wird.

4. Eine Spannvorrichtung (100) nach Anspruch 1, wobei sich die Oberfläche, die sich mit dem Spannerarm (118) bewegt, auf dem zweiten Dämpfungselement (126) befindet, und
wobei sich die Oberfläche, die sich mit der Wellen- und Basiseinheit (114) bewegt, auf der Wellen- und Basiseinheit (114) befindet.

5. Eine Spannvorrichtung (100) nach Anspruch 4, wobei das zweite Dämpfungselement (126) eine dritte Radialkraft von dem ersten Segment der Spannfeder (122) erhält, die einen dritten Betrag der Reibungskraft zwischen dem zweiten Dämpfungselement (126) und der Wellen- und Basiseinheit (114) verursacht, so dass eine Gesamtreibungskraft zwischen dem zweiten Dämpfungselement (126) und der Wellen- und Basiseinheit (114) durch die erste und dritte Radialkraft beigetragen wird und/oder das zweite Dämpfungselement (126) direkt radial an einer radial äußeren Fläche der Wellen- und Basiseinheit (114) angreift, das erste Dämpfungselement (124) direkt radial an einer radial äußeren Fläche des zweiten Dämpfungselements (126) angreift und die Spannfeder (122) direkt radial sowohl an dem ersten als auch an dem zweiten Dämpfungselement (124, 126) angreift.

6. Eine Spannvorrichtung (100) nach einem der vorhergehenden Ansprüche, wobei die Spannfeder (122) eine schraubenförmige Torsionsfeder ist und/oder das erste Segment der Spannfeder (122) ein erstes Federende (123) aufweist, das relativ zu der Wellen- und Basiseinheit (114) fixiert ist, und das zweite Segment der Spannfeder (122) ein zweites Federende (125) aufweist, das relativ zu dem Spannerarm (118) fixiert ist.

7. Eine Spannvorrichtung (100) nach einem der vorstehenden Ansprüche, wobei das Eingriffselement des endlosen Antriebselements eine Riemenscheibe (120) ist, die um eine Riemenscheibenachse (AP) drehbar ist, die von der Achse (AA) des Spannerarms versetzt ist.

## Revendications

1. Tendeur (100) pour un élément d'entraînement sans fin (103) sur un moteur, comprenant :
une unité d'arbre et de base (114) qui peut être montée pour être stationnaire par rapport à un moteur ;
un bras de tendeur (118) qui peut pivoter par rapport à l'unité d'arbre et de base (114) autour d'un axe de bras de tendeur (AA) ;
un élément de prise d'élément d'entraînement sans fin (120) sur le bras de tendeur (118) et pouvant venir en prise avec un élément d'entraînement sans fin (103) ;
un ressort de tendeur (122) qui pousse le bras de tendeur (118) dans une direction de bras libre ; un premier élément amortisseur (124) qui est fixe par rapport à l'unité d'arbre et de base (114), et qui reçoit une première force radiale depuis un premier segment du ressort de tendeur (122) qui provoque une première quantité de force de frottement entre le premier élément amortisseur (124) et une surface qui se déplace avec le bras de tendeur (118) ; et
un second élément amortisseur (126) qui est fixe par rapport au bras de tendeur (118), et qui reçoit une deuxième force radiale depuis un second segment du ressort de tendeur (122) qui est espacé axialement du premier segment du ressort de tendeur (122), qui provoque une deuxième quantité de force de frottement entre le second élément amortisseur (126) et une surface qui est stationnaire avec l'unité d'arbre et de base (114), dans lequel le premier élément amortisseur vient directement en prise radialement avec une face radialement extérieure du bras de tendeur (118), le second élément amortisseur (126) vient directement en prise radialement avec une face radialement extérieure du premier élément amortisseur (124), et le ressort de tendeur (122) vient directement en prise radialement à la fois avec les premier et second éléments amortisseurs (124, 126).

2. Tendeur (100) selon la revendication 1, dans lequel la surface qui se déplace avec le bras de tendeur (118) se trouve sur le bras de tendeur (118), et
dans lequel la surface qui est stationnaire avec l'unité d'arbre et de base (114) se trouve sur le premier élément amortisseur (124).

3. Tendeur (100) selon la revendication 2, dans lequel le premier élément amortisseur (124) reçoit une troisième force radiale depuis le second segment du ressort de tendeur (122) qui provoque une troisième quantité de force de frottement entre le premier élément amortisseur (124) et le bras de tendeur (118), de sorte qu'une force de frottement totale entre le premier élément amortisseur (124) et le bras de tendeur (118) est apportée par les première et troisième forces radiales.

4. Tendeur (100) selon la revendication 1, dans lequel la surface qui se déplace avec le bras de tendeur (118) se trouve sur le second élément amortisseur (126), et
dans lequel la surface qui se déplace avec l'unité d'arbre et de base (114) se trouve sur l'unité d'arbre et de base (114).

5. Tendeur (100) selon la revendication 4, dans lequel le second élément amortisseur (126) reçoit une troisième force radiale depuis le premier segment du ressort de tendeur (122) qui provoque une troisième quantité de force de frottement entre le second élément amortisseur (126) et l'unité d'arbre et de base (114), de telle sorte qu'une force de frottement totale entre le second élément amortisseur (126) et l'unité d'arbre et de base (114) est apportée par les première et troisième forces radiales et/ou le second élément amortisseur (126) vient directement en prise radialement avec une face radialement extérieure de l'unité d'arbre et de base (114), le premier élément amortisseur (124) vient directement en prise radialement avec une face radialement extérieure du second élément amortisseur (126), et le ressort de tendeur (122) vient directement en prise radialement à la fois avec les premier et second éléments amortisseurs (124, 126).

6. Tendeur (100) selon l'une des revendications précédentes, dans lequel le ressort de tendeur (122) est un ressort hélicoïdal de torsion et/ou le premier segment du ressort de tendeur (122) a une première extrémité de ressort (123) qui est fixe par rapport à l'unité d'arbre et de base (114) et le second segment du ressort de tendeur (122) a une seconde extrémité de ressort (125) qui est fixe par rapport au bras de tendeur (118).

7. Tendeur (100) selon l'une quelconque des revendications précédentes, dans lequel l'élément de prise d'élément d'entraînement sans fin est une poulie (120) qui peut tourner autour d'un axe de poulie (AP) qui est décalé par rapport à l'axe de bras de tendeur (AA).
